# EUROPEAN PATENT APPLICATION

(11) **EP 4 823 143 A1**
(43) Date of publication of application: **14.10.2026**
(21) Application number: 25169949.2
(22) Date of filing: 11.04.2025
(51) Int. Cl.: H04W 12/63, G06F 21/30, H04L 9/40, H04W 12/06, H04W 12/065, H04W 12/65, H04W 12/79

(54) **NETWORK SENSING-DRIVEN SECURITY AUTHENTICATION SERVICES FOR REAL-TIME USER VERIFICATION IN TELECOMMUNICATION NETWORKS**

(71) Applicant: Deutsche Telekom AG, 53113 Bonn (DE)
(72) Inventor: ARUNOV, Elmar, 10587 Berlin (DE); PLACHY, Jan, 10781 Berlin (DE)
(74) Representative: Vossius & Partner Patentanwälte Rechtsanwälte mbB

(57) **Abstract**

The present invention relates to a method for authentication based on network sensing in a communication network, wherein an authentication request is received, wherein the authentication request relates to a specific user and a specific user equipment associated with said specific user, and wherein the method comprises the steps of: a) determining a location of the specific user equipment; b) determining an identity of the specific user based on a network sensing in the communication network; c) determining based on network sensing in the communication network a distance between the specific user and the specific user equipment; d) determining a probability of user authentication certainty based on results of steps a), b), and c); and then e) authenticating the specific user based one the probability of user authentication certainty against a predetermined certainty threshold.

## Description

The present disclosure relates to a method and system for a network- driven security system. **In** detail the disclosure relates to network sensing-driven security authentication services for real-time user verification in telecommunication networks.

US 2022/0046415 A1 relates to a system providing a technique for enhanced authentication techniques that leverage network-based location determination of UEs, such as mobile telephones or other devices that communicate with a wireless network. For example, a wireless network may monitor, determine, or otherwise maintain information regarding the geographic location of User Equipments ("UEs") that are associated with the wireless network. Some embodiments may utilize such network-monitored location information to verify that a participant device, associated with a given UE, is located within a particular proximity of the UE when performing an authentication process to receive services or resources.

That is, US 2022/0046415 A1 addresses localization of UE only, thus, leaving a vulnerability of another person using the UE to access the authentication protected resources.

US 2021/0029540 A1 relates to methods, systems, and computing platforms for authenticating activity on another computing device in real-time using a mobile device on a high generation cellular network. Aspects of the document leverage and utilize a user's mobile device connected to a high generation cellular network to collect and analyze data about a user to seamlessly identify and prevent potentially fraudulent transactions.

That is, US 2021/0029540 A1 leverages presence of UE as a second factor authentication.

US 2017/109950 A1 relates to a security system that integrates physical and logical security controls for the protection of secured resources. The resources may include physical locations and/or computing resources such as databases containing personal information.

In the daily life people are faced with many situations where they need to authenticate themselves in electronic systems or services, examples are banking, healthcare and/or governmental communication.

Hereinafter the term system or service is used synonymously with regard to the authentication process. For the subject-matter of this disclosure, it is not relevant what kind of service or system is used. It is, however, relevant that a human being, i.e. a user, performs authentication with a device or system with respect to the service. That is, the subject-matter of the present disclosure provides a method or system to perform authentication of a user.

A common way for authentication is to use a secret password, however, a sole use of a password is typically not considered secure anymore and thus two-factor authentication, 2FA, methods are now widely deployed.

The 2FA authentication provides an additional layer of security if the secret password is compromised or in case there is a data leakage making the password public. The 2FA can be based on hardware keys or code generators.

With the high availability of mobile devices, the mobile devices are commonly used for providing 2FA. The mobile devices and the 2FA generator can be protected by additional layer of security, such as password, PIN or biometrics. However, even this security layer may also be compromised, because said additional elements can be either obtained or a user can be forced to provide them.

The above problems are among those solved by the present disclosure. The present disclosure is defined by the appended claims.

All references identified in the present disclosure, especially the description of sensing methods disclosed therein, are herewith incorporated by reference.

According to an aspect of the present disclosure, there is provided a method for authentication based on network sensing in a communication network, wherein an authentication request is received, wherein the authentication request relates to a specific user and a specific user equipment associated with said specific user, and wherein the method comprises the steps of: a) determining a location of the specific user equipment; b) determining an identity of the specific user based on a network sensing in the communication network; c) determining based on network sensing in the communication network a distance between the specific user and the specific user equipment; d) determining a probability of user authentication certainty based on results of steps a), b), and c); and the e) authenticating the specific user based one the probability of user authentication certainty against a predetermined certainty threshold.

According to an embodiment of the present disclosure, the determining of the identity of the user is based WiFi-based person identification via bio-electromagnetic information.

According to an embodiment of the present disclosure, the determining of the identity of the user is based on determining the user specific impact on Channel State Information, CSI.

According to an embodiment of the present disclosure, the determining of the identity of the user is based on one or more specific features of the user, wherein preferably the one or more specific features of the user are a pre-determined, more preferably wherein the one or more specific features are pre-determined in a registration step.

According to an embodiment of the present disclosure, the network sensing in steps b) and/or c) is carried out by the communication network.

According to an embodiment of the present disclosure, the network sensing is based on Wi-Fi sensing and/or ISAC sensing.

According to an embodiment of the present disclosure, the location of the specific user equipment is comprised in the authentication request or is determined by the communication network.

According to an embodiment of the present disclosure, the location of the specific user equipment is comprised in the authentication request or is determined by the communication network.

According to an embodiment of the present disclosure, an additional authentication is requested, in case the determined probability of user authentication certainty is below the pre-determined threshold.

According to an embodiment of the present disclosure, the predetermined threshold is dynamically adjusted based one or more of: the used sensing method, the sensed environment, the communication network, a location of the user, and the presence of other humans.

According to an embodiment of the present disclosure, any of the above steps are repeated, preferably based on a pre-determined time-limit, a -predetermined interval, and/or a predetermined trigger.

According to an aspect of the present disclosure, a system for authentication based on network sensing in a communication network, wherein the system is configured to receive an authentication request, wherein the authentication request relates to a specific user and a specific user equipment associated with said specific user, and wherein the system comprises: a location unit configured to determine a location of the specific user equipment; a network sensing unit configured to determine an identity of the specific user based on a network sensing in the communication network; the network sensing unit being further configured to determine based on network sensing in the communication network a distance between the specific user and the specific user equipment; a processing unit configured to determine a probability of user authentication certainty based on the output of the location unit and the network sensing; and the processing unit being further configured to authenticate the specific user based one the probability of user authentication certainty against a predetermined certainty threshold.

Computer program comprising instructions which, when the program is executed by a communication network, cause the network to carry out the steps of the method of any one of the above aspects and embodiments.

A computer-readable medium comprising instructions which, when executed by a communication network, cause the network to carry out the steps of the method of any one of the above aspects and embodiments.

Other aspects, features, and advantages will be apparent from the summary above, as well as from the description that follows, including the figures and the claims.

The core of the present disclosure is to leverage a sensing technology by a network, considering both Wi-Fi sensing and Integrated Sensing and Communication in mobile networks, which is including sensing by the user device itself, or any other sensing technology, such as radar, LIDAR or camera, to authenticate users.

The description of the present disclosure is limited to the use of Radio-Frequency, RF, sensing, i.e., Wi-Fi based sensing and/or Integrated Sensing and Communication, ISAC, sensing. However, it is noted that the same method and system can be applied, mutatis mutandis, to virtually any other sensing technology, such as radar, LIDAR or camera-based sensing.

According to embodiments of the present disclosure, the respective sensing technology can selectively sense a specific user, i.e., human being, based on an incoming request without affecting the privacy of other users. That is, a location and/or presence of a human may be sensed. Furthermore, specific characteristics of said human may be additionally sensed, e.g. movement characteristic, a height and width of the human or such may be sensed.

The core concept of this disclosure is that network sensing operates on anonymized, non-intrusive data patterns rather than personal identifiers. These technologies rely on signal reflections, motion detection, and environmental changes rather than capturing or analyzing personal content, such as messages or browsing history.

A preferred embodiment of the present disclosure is based on radio frequency, RF, sensing, which provides a picture of an environment with both objects and living things. The picture provides limited features, such as presence of an object, it's location, movement and possibly characteristics such as reflectivity. i.e. how strongly does the object reflect the RF signal.

For the authentication according to embodiments of the present disclosure, a known description of a specific user in the available feature space is compared with the sending signal. Thus, only an object that matches the specific user will be identified. Other objects may be classified into objects or living things. To assess safety of the specific user, some embodiments may infer if there are other persons, but without affecting their privacy as they cannot be identified, and their respective activity.

Furthermore, the complementary sensing may be performed, which may enable detection of physical attacks via activity detection or through a heart rate measurement that can be carried out by a variety of sensors, such as smart watch, or even through network sensing.

According to embodiments of the present disclosure, network sensing enables fast on-demand authentication of the user. In combination with communication technology localizing a user's mobile device, proximity of user and mobile device can be verified, so that in case when the mobile device is lost, the access to the requested service will not be authorized.

To overcome cyber threats, additionally data flow from the mobile device can be monitored and anomalies caused by a malicious attacker can be detected.

As the level of uncertainty of sensing the specific user may vary, the sensing approach can be combined with other existing authentication methods to increase the certainty of correct user authentication.

Several alternative approaches such as Device-Based Authentication or Geolocation-Based Authentication have been considered and evaluated for solving the problem, but none were as effective as the embodiments of the present disclosure.

Embodiments of the present disclosure utilize network sensing to monitor the context and environment in which authentication requests are made. That results in dynamic, context-aware security, which continuously adapts to real-time network conditions.

Unlike traditional static mechanisms, embodiments of the present disclosure offer flexible, dynamic responses to varying network environments and evolving threat levels. Furthermore, the method and system are preferably seamlessly integrated within existing telecommunication network infrastructure, making it highly scalable for mobile carriers, ISPs, and enterprise networks.

### Brief description of the drawings

The disclosure will be further described with reference to the figures. Therein,
- Fig. 1: shows a block diagram of a method according to an embodiment of the present disclosure; and
- Fig. 2: shows a system and a data-flow according to embodiments of the present disclosure.

### Detailed description of the drawings

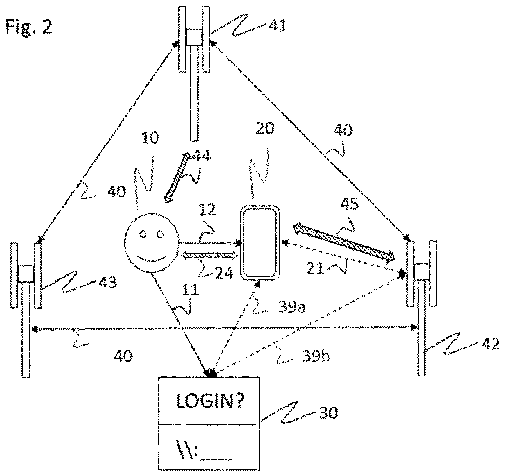

Fig. 2 shows a system and a data-flow according to embodiments of the present disclosure. The drawing shows a user 10, a user equipment 20 or first computing device 20, a second computing device 30, and a network 40, wherein the network 40 is symbolized by three network entities 41, 42, 43.

Examples for a user equipment are a smart phone, a tablet, a smart watch, an extended reality device or any other network connected computing device. The term user device is synonymously user for user equipment.

Examples for second computing devices are a personal computer, server, a further user equipment or a ATM. However, the second computing device or entity may also be a service run on the user device 20 and /or a server providing a service accessed via the user device 20.

Examples for a network entity 41, 42, 43 are routers, repeaters, base stations, or other elements of a telecommunication network, specifically including other user equipment connected to the network 40.

The user may want to access a service on the user equipment 20 via a request 12 or on the second computing device 30 via a request 11. The service on the user equipment may request authentication from the user device (not shown) or via a request 21 to the network 40. The service on the second computing device 30 may request authentication via a request 39a to the user equipment 20 or via a request 39b to the network 40.

The authentication may be performed based on a first sensing 44, i.e. the network sensing the user 10 directly. The authentication may be performed based on a second sensing 24, i.e. the user equipment 20 sensing the user 10. The authentication may be performed based on a third sensing 45, i.e. the network sensing the user equipment 20. Furthermore, the third sensing may also be inverted, i.e. the user equipment sensing one or more network entities.

Furthermore, combinations of the first, second and third sensing are forming embodiments of the present disclosure.

Preferred embodiments relate to network sensing and user equipment sensing of the user, i.e. first and second sensing.

Thus, the authentication may be based on a sensing 44 of the user 10 and/or the user equipment 20 by the network 40, while the service may be located at the user equipment 20, a second computing device 30, or in the network itself (not shown).

Thus, the authentication may also be based on a sensing 24 of the user 10 by the user equipment 20, while the service may be located at the user equipment 20, a second computing device 30, or in the network itself (not shown).

An authentication according to embodiments of the present disclosure based network sensing requires to know the user's device location, except for the embodiments in which the user equipment proceeds with the user authentication itself.

In embodiments of the present disclosure, the device's location is used to check that the user and the user device are located at the same location, i.e., determined whether the user device has been stolen and someone else (i.e., a malicious user) impersonates the user.

If the location is available, then the method proceeds to sensing. If the sensing is not done via the user device and the device location is not available, the authentication will be done via standard authentication without sensing.

In embodiments of the present disclosure, a sensing service, capable of authenticating the user needs to be available at the user location, i.e., sensing service quality of service needs to be met at the time of the authentication request.

In a preferable embodiment available sensing technologies and methods are checked, and the one capable of providing the highest level of the user authentication certainty is selected.

In a next step the selected sensing method is employed, and the sensing starts with the goal of authenticating the user. The sensing may starts collecting wireless channel information data that is used to authenticate the user, the skilled person is aware how this may be implemented, e.g., by: T. Xin, B. Guo, Z. Wang, M. Li, and Z. Yu, "Freesense: indoor human identification with wifi signals," arXiv preprint arXiv:1608.03430, 2016.; Y. Zeng, P. H. Pathak, and P. Mohapatra, "Wiwho: wifi-based person identification in smart spaces," in IPSN, 2016.; or J. Zhang, B. Wei, W. Hu, and S. S. Kanhere, "Wifi-id: human identification using wifi signal," in DCOSS, 2016.

The sensing ends, either when sufficient amount of data (channel information) needed to authenticate the user (with sufficient certainty) has been collected and the method proceeds, or in case not enough data can be collected, preferably within a predetermined time, standard authentication is used.

As an output, the sensing provides a probability of user authentication certainty, which is checked against a predetermined certainty threshold. That is, depending on the criticality of the application the threshold is set, e.g., the more critical systems the higher the threshold. If the certainty is above the threshold, the method proceeds, otherwise, additional authentication may be triggered.

In a preferred embodiment, whether the user device and the user are at the same location, i.e., the user device is under control of the user is checked by measuring the proximity of the user device and the user.

Embodiments of the present disclosure alternatively improve the authorization process by sensing further parameters.

In a preferred embodiment the method further determines whether the user is or is not in a safe location. This may be implemented by a check for a presence of other persons in the user surrounding or having a database with safe or unsafe locations defined by service provider. The skilled person is aware of different methods to check of the presence of other persons such as described in Y. Gu, J. Chen, K. He, C. Wu, Z. Zhao and R. Du, "WiFiLeaks: Exposing Stationary Human Presence Through a Wall With Commodity Mobile Devices," in IEEE Transactions on Mobile Computing, vol. 23, no. 6, pp. 6997-7011, June 2024, doi: 10.1109/TMC.2023.3328349.

Additionally, or alternatively the methods may determine a pose and/or respective activity of the user or one or more other person. The skilled person is aware of different methods to determine a pose and/or respective activity including an interaction between humans. This is described, for example, in Gu, Yangyang, Jing Chen, Cong Wu, Kun He, Ju Jia, Yebo Feng, Congrui Chen, and Ruiying Du. "CSIPose: Unveiling Body Pose Using Commodity WiFi Devices Through the Wall." Authorea Preprints (2024),Sheng, Biyun, Fu Xiao, Linqing Gui, and Zhengxin Guo. "Context-Aware Faster RCNN for CSI-Based Human Action Perception." IEEE Transactions on Human-Machine Systems 53, no. 2 (2022): 438-448, or in Yang, Xiaobo, Daosen Zhai, Ruonan Zhang, Haotong Cao, Sahil Garg, and Mohammad Mehedi Hassan. "Human-to-human interaction behaviors sensing based on complex-valued neural network using Wi-Fi channel state information." Future Generation Computer Systems (2023).

Furthermore, an emotion of the user may be sensed. The skilled person is aware of different methods to sense an emotion, such as described in Gu, Yu, Xiang Zhang, Huan Yan, Jingyang Huang, Zhi Liu, Mianxiong Dong, and Fuji Ren. "WiFE: WiFi and Vision based Unobtrusive Emotion Recognition via Gesture and Facial Expression." IEEE Transactions on Affective Computing (2023).

If it is determined that the user is in a safe location based on one or more of the above discussed sensing steps the method proceeds. If service provider enables access at unsafe location additional authentication is initiated, otherwise authentication is rejected.

In case of a successful user authentication, the user is granted access to the service in the system. During the use of the service, the user is optionally repeatedly authenticated. This is preferably based on the safety and/or location of the user and the environment, i.e., the more challenging environment and the less certainty in the authentication, the more frequent the authentication is done.

The system and method according to an embodiment of the present disclosure may also check for any anomalies in the communication data flow, e.g. by determining whether communication to unknown destinations or to known malicious destinations, is carried out, the skilled person is aware of different methods to implement such detection, e.g. by S., Rohini, A. Guleria, and R. K. Singla.

"An overview of flow-based anomaly detection." International Journal of Communication Networks and Distributed Systems 21, no. 2 (2018): 220-240.

The system and method according to an embodiment of the present disclosure may also check if any anomalies are detected in the user behavior, e.g. through the user movement and activity detection, or the environment. If any anomalies are detected, authentication is re-evaluated.

By verifying the proximity of the user and their mobile device and analyzing behavioral patterns, this solution enhances authentication certainty and protects against unauthorized access in case of device loss or malicious attacks.

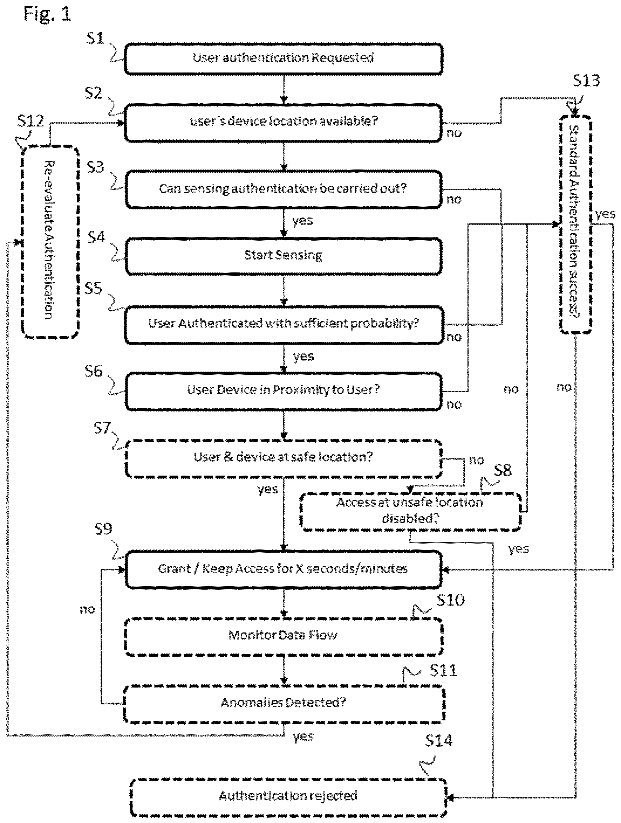

Fig. 1 shows a block diagram of a method according to an embodiment of the present disclosure. The Figure comprises different embodiments. Optional steps are shown with a dashed outline.

Prior to use the user has registered for sensing services, i.e., has been scanned by one or more sensing methods to create a model and/or characteristics features, preferably based on a specific impact on the propagation of sensing signal. e.g., as discussed in Han, Mingda, Linlin Guo, Jia Zhang, Hui Ji, Zihan Diao, and Jiande Sun. "WiID: Precise WiFi-based person identification via bio-electromagnetic information." In 2022 26th International Conference on Pattern Recognition (ICPR), pp. 1105-1112. IEEE, 2022., or FreeSense:Indoor Human Identification with WiFi Signals, or walking gait WiWho: WiFi-based Person Identification in Smart Spaces.

The process begins when a user, having previously registered for the sensing service, initiates authentication, e.g., a payment request through their user device(e.g., smartphone, smartwatch, etc.). That is, in step S1 an authentication request is received. Preferably, the request is received at the network from a service the user wants to authenticate to. As discussed above the authentication request may be generated by the service. The request may be generated by the device, by the network, or by a second computing device.

An example a of the service: user is purchasing an item in an online store, which has set up PayPal service for the payments. During the checkout the user selects PayPal as the payment service and is directed to PayPal payment service. At the payment service the user is asked to complete authentication and is presented with an option to use Network sensing.

The user selects Network sensing, and PayPal sends request to authenticate the user to the network sensing system. The network sensing system receives the request and processes it.

In a preferred embodiment of the present disclosure, the request consists of user unique identifier, a device unique identifier for the network to distinguish the device and to localize it. It is assumed that the user will log to a service using provided credentials (this will identify the user in the request - identifier, the device identifier (preferably IMEI but other unique device identifiers may be used) only used to distinguish the and check if the device and the user are in proximity (i.e., being within reach of user) - this allows case where user may use someone else's device.

In step S2 it is determined whether a location of the device, preferably a specific device associated to the user for authentication, is available. That, is whether the location of the device, preferably represented satellite based coordinates, such as GNSS coordinates, is already known, e.g., comprised in the authentication request, or is determined by a suitable method, e.g., positioning and location service, or triangulation.

Returning to the above example, the network sensing system according to the present disclosure checks whether the location of the user's device is already available, preferably provided by the device itself preferably based on GNSS or positioning and localization service, or the network localizes the device either through triangulation. If the authentication request from PayPal includes the device's location, it will be used. If not, the network is configured to determine the location of the device, preferably in real time.

In case the device's location can be determined or is known, the method proceeds to step S3. Otherwise, the method may proceed with a standard authentication in step S13.

In step S3, if the location of the device is available, it is determined whether network sensing can be carried out, i.e., whether a suitable sensing service such as Wi-Fi sensing or mobile network centric sensing is available and can meet the authorization requirements on sensing.

Returning to the above example, if the location of the device is available, the network sensing system assesses whether network sensing can be executed at the location of the device. For example, if the user is at home, Wi-Fi sensing is available and may detect the device's presence within a known network. If the user is in a public place, mobile network-based sensing, such as ISAC, can be used to track device's proximity through radio signal reflections.

Furthermore, it is determined whether the sensing service is suitable based on the complexity of the environment.

As discussed above, the sensing is carried out by the network and/or the user device. The sensing is carried out with regard to the user, i.e., sensing the human who has already registered the required sensing features.

Here it is noted that the sensing of a human may be performed, e.g. analyzing movement patterns, device signals, and/or contextual data, because it is possible to obtain features of humans based on geometry, reflection, movement, etc. It is an aspect of the present disclosure to identify a specific human known by the system based on said specific features. In a preferred embodiment the specific features are pre-determined. That is, the user has previously registered the required features, e.g. the user was scanned by the sensing service to create a model to be distinguished from other humans later when using the sensing service.

The term human is used for the human user with the device trying to access service. Thus, according to embodiments of the present disclosure, the proximity of the human and the device is checked. The right human, i.e. a specific user, is at least partially discoverable by activity, but completely by RF features, movement, etc.

That is, a network sensing system is selectively activated to authenticate the user while maintaining the privacy of uninvolved individuals. In a preferred embodiment of the disclosure Wi-Fi sensing and/or ISAC is used to analyze the user's location and/or movement patterns.

More preferably, proximity between the user and the user equipment is verified to ensure that the user is physically near the respective device. This proximity check is crucial, as it prevents unauthorized access in scenarios, in which the device may have been lost or stolen. The location of the device and user also indicates the safety of user and may trigger an additional authentication, if an unsafe location is detected.

It is noted that to identify a stationary user an impact on Channel State Information, CSI, may be determined, by looking for an unique impact of user on the signal. In a preferred embodiment, the identification may carried out by a neural network configured to match user and a measured CSI.

In case step S3 determines that one or more network sensing (mobile network or Wi-Fi sensing) can be carried out, one network sensing ₘ method is selected, preferably the most precise sensing is selected, and sensing is started in step S4. Otherwise, a standard authorization may be carried out in step S13.

In step S4 the sensing is started, and said sensing is ended either by an authentication of sufficient probability or insufficient probability in step S5. That is, in a preferred embodiment the sensing data is collected, and it is determined whether or not a sufficient amount of sensing data has been collected, preferably based on a precision of a location detected and/or a movement detection of the user. In case the sensing was not successful in step S5, a standard authentication may be carried out in step S13.

Returning to the above example, the network sensing system starts collecting real-time data. in case the user is at home, Wi-Fi sensing analyzes signal variations caused by movement patterns and the device's proximity to known locations, e.g., known sitting spots.

In case the user is in a public spot such as a shopping mall, mobile network ISAC data is used to determine whether the user's movement aligns with typical patterns, e.g. standing at a checkout counter. In case the user is static, the identification of the user is done by matching the measured CSI and user's physical impact on the CSI that the user previously registered.

In step S5 it is determined whether the user can be authenticated by a sufficient probability. If the user can be authenticated in step S5, then in step S6, it is determined whether the user equipment is in proximity to the user, based on the location of the user equipment.

The sufficient probability may be determined based on a user input or may be experimentally determined by training the system. In a preferred embodiment, training is based on a Deep Neural Network configured to minimize False Positive and maximize the correct authentication.

Returning to the above example, the system, preferably an AI system, analyzes the sensing data to determine authentication probability. In case the user is in their home and the movement pattern matches typical behavior, e.g., walking between rooms before a transaction, authentication is highly probable. However, if the device is detected in an unfamiliar environment with non-typical movement, the probability of authentication is lower. The latter may trigger additional standard verification.

In case the user cannot be authenticated with sufficient probability, standard authentication may be triggered in step S13.

In case the user has been authenticated in step S5 and the user and the device are in proximity instep S6, then access is granted in step S9, preferably for a predetermined time.

That is, in step S9 a response to the user authentication request of step S1 is output. Furthermore, it is noted that steps S3, S5, and S6 form the core aspects of the present disclosure. In preferred embodiments the core aspects are repeated periodically.

Returning to the above example, the system ensures that the user is physically near the device. For instance, if Wi-Fi sensing detects the user moving in sync with the device (e.g., carrying the smartphone), authentication confidence increases. In case the device remains stationary while environmental signals indicate user movement away from it, the system may suspect unauthorized use. A predefined time may be set to a time expected to complete the transaction or based on the needs of the service provider.

The steps of the core aspects are shown with a solid circumference in Fig. 1, optional steps are shown with s dashed line.

To enhance security, the method may employ further sensing for services requiring high level of authentication security if these methods are available. The further sensing is shows as optional steps S7, S10, and S11.

In step S7 it is determined whether the user and/or the user equipment are in a safe location (defined by the service provider or the user). Furthermore, the service provider may decide not to allow access at unsafe locations step S8.

Returning to the above example, the user can define its safe locations, such as user's home. The service provide can define safe locations, e.g., it's physical store or in inverse way define known unsafe locations (such as those crime spots).

In step S10 a communication data flow analysis is performed, preferably analyzing the data flow from the digital device to detect anomalies in step S11 that could indicate malicious activity, e.g., unexpected access attempts.

Returning to the above example, the flows to known malicious servers indicate unwanted communication and malicious activity on the device.

Additionally, behavioral and environment analysis may be used (not shown) to verify that the user's interaction patterns (e.g., gesture, movement, etc.) align with their known profile.

In a preferred embodiment, ff the sensing data alone doesn't provide a high enough level of certainty, the embodiment may autonomously combine the sensing-based authentication with standard authentication methods, e.g., biometric, password/PIN, etc., to ensure accurate and secure user authentication.

In a preferred embodiment is authentication is re-evaluated in step S12, preferably at a predetermined time interval. Ina preferred embodiment of the present disclosure, the steps of authentication are repeated, starting with step S2.

Returning to the initial example, once the system confirms the user's identity and proximity to the device, the payment is authorized. If anomalies are detected, the transaction is flagged for further review or denied completely. A criterion for repetition of the authentication of payment service may be that the user is taking longer than expected to complete the transaction, leads to starting authentication again. Alternatively, or additionally, the repetition may be event triggered.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure.

Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof.

The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for authentication based on network sensing in a communication network,
wherein an authentication request is received,
wherein the authentication request relates to a specific user and a specific user equipment associated with said specific user, and
wherein the method comprises the steps of:
a) determining a location of the specific user equipment;
b) determining an identity of the specific user based on a network sensing in the communication network;
c) determining based on network sensing in the communication network a distance between the specific user and the specific user equipment;
d) determining a probability of user authentication certainty based on results of steps a), b), and c); and
e) authenticating the specific user based one the probability of user authentication certainty against a predetermined certainty threshold.

2. The method according to claim 1,
wherein the determining of the identity of the user is based WiFi-based person identification via bio-electromagnetic information.

3. The method according to claim 1,
wherein the determining of the identity of the user is based on determining the user specific impact on Channel State Information, CSI.

4. The method according to any one of claims 1 to 3,
wherein the determining of the identity of the user is based on one or more specific features of the user,
wherein preferably the one or more specific features of the user are a pre-determined,
more preferably wherein the one or more specific features are pre-determined in a registration step.

5. The method according to any one of claims 1 to 4, wherein the network sensing in steps b) and/or c) is carried out by the communication network.

6. The method according to any one of claims 1 to 5, wherein the network sensing is based on Wi-Fi sensing and/or ISAC sensing.

7. The method according to any one of claims 1 to 6, wherein the location of the specific user equipment is comprised in the authentication request or is determined by the communication network.

8. The method according to any one of claims 1 to 7, wherein the location of the specific user equipment is comprised in the authentication request or is determined by the communication network.

9. The method according to any one of claims 1 to 8, wherein an additional authentication is requested, in case the determined probability of user authentication certainty is below the pre-determined threshold.

10. The method according to any one of claims 1 to 9,
wherein the predetermined threshold is dynamically adjusted based one or more of:
the used sensing method, the sensed environment, the communication network, a location of the user, and the presence of other humans.

11. The method according to any one of claims 1 to 10, wherein any of the above steps are repeated, preferably based on a pre-determined time-limit, a -predetermined interval, and/or a pre-determined trigger.

12. A system for authentication based on network sensing in a communication network,
wherein the system is configured to receive an authentication request,
wherein the authentication request relates to a specific user and a specific user equipment associated with said specific user, and
wherein the system comprises:
a location unit configured to determine a location of the specific user equipment;
a network sensing unit configured to determine an identity of the specific user based on a network sensing in the communication network;
the network sensing unit being further configured to determine based on network sensing in the communication network a distance between the specific user and the specific user equipment;
a processing unit configured to determine a probability of user authentication certainty based on the output of the location unit and the network sensing; and
the processing unit being further configured to authenticate the specific user based one the probability of user authentication certainty against a predetermined certainty threshold.

13. Computer program comprising instructions which, when the program is executed by a communication network, cause the network to carry out the steps of the method of any one of claims 1 to 11.

14. A computer-readable medium comprising instructions which, when executed by a communication network, cause the network to carry out the steps of the method of any one of claims 1 to 11.

## Amended claims

### Amended claims in accordance with Rule 137(2) EPC.

1. A method for authentication based on network sensing in a communication network, wherein an authentication request is received,
wherein the authentication request relates to a specific user and a specific user equipment associated with said specific user, and
wherein the method comprises the steps of:
a) determining a location of the specific user equipment;
b) selectively activate the network sensing to authenticate the specific user while maintaining the privacy of uninvolved individuals and determining an identity of the specific user based on a network sensing in the communication network;
c) determining based on network sensing in the communication network a distance between the specific user and the specific user equipment;
d) determining a probability of user authentication certainty based on results of steps a), b), and c); and
e) authenticating the specific user based one the probability of user authentication certainty against a predetermined certainty threshold.

2. The method according to claim 1, further comprising:
analyzing the sensing data to determine the probability of user authentication certainty,
wherein in case the specific user is in their home and a movement pattern matches typical behavior, the probability is increased, and/or
wherein if the device is detected in an unfamiliar environment with non-typical movement, the probability is decreased.

3. The method according to claim 1 or 2, further comprising:
analyzing the sensing data to determine the probability of user authentication certainty,
wherein in case the specific user moving in sync with the device, the probability is increased, and/or
wherein the device remains stationary while the specific user is moving away from it, the probability is decreased.

4. The method according to any one of claims 1 to 3, further comprising:
determining that the user is in a safe location based on the network sensing indicating one or more of:
a presence of one or more other persons;
a pose and/or respective activity of the specific user or the one or more other persons; and
an emotion of the specific user
wherein the predetermined threshold is dynamically adjusted based on whether the user is in a safe location.

5. The method according to claim 1,
wherein the determining of the identity of the user is based WiFi-based person identification via bio-electromagnetic information.

6. The method according to claim 1,
wherein the determining of the identity of the user is based on determining the user specific impact on Channel State Information, CSI.

7. The method according to any one of claims 1 to 3,
wherein the determining of the identity of the user is based on one or more specific features of the user,
wherein preferably the one or more specific features of the user are a pre-determined,
more preferably wherein the one or more specific features are pre-determined in a registration step.

8. The method according to any one of claims 1 to 4, wherein the network sensing in steps b) and/or c) is carried out by the communication network.

9. The method according to any one of claims 1 to 5, wherein the network sensing is based on Wi-Fi sensing and/or ISAC sensing.

10. The method according to any one of claims 1 to 6, wherein the location of the specific user equipment is comprised in the authentication request or is determined by the communication network.

11. The method according to any one of claims 1 to 7, wherein an additional authentication is requested, in case the determined probability of user authentication certainty is below the pre-determined threshold.

12. The method according to any one of claims 1 to 9, wherein any of the above steps are repeated, preferably based on a pre-determined time-limit, a -predetermined interval, and/or a pre-determined trigger.

13. A system for authentication based on network sensing in a communication network,
wherein the system is configured to receive an authentication request,
wherein the authentication request relates to a specific user and a specific user equipment associated with said specific user, and
wherein the system comprises:
a location unit configured to determine a location of the specific user equipment;
a network sensing unit configured to be selectively activated to authenticate the specific user while maintaining the privacy of uninvolved individuals and to determine an identity of the specific user based on a network sensing in the communication network;
the network sensing unit being further configured to determine based on network sensing in the communication network a distance between the specific user and the specific user equipment;
a processing unit configured to determine a probability of user authentication certainty based on the output of the location unit and the network sensing; and
the processing unit being further configured to authenticate the specific user based one the probability of user authentication certainty against a predetermined certainty threshold.

14. Computer program comprising instructions which, when the program is executed by a communication network, cause the network to carry out the steps of the method of any one of claims 1 to 12.

15. A computer-readable medium comprising instructions which, when executed by a communication network, cause the network to carry out the steps of the method of any one of claims 1 to 12.
